# EUROPEAN PATENT SPECIFICATION

(11) **EP 1 481 861 B1**
(45) Date of publication and mention of the grant of the patent: **04.07.2007**
(21) Application number: 03076634.9
(22) Date of filing: 28.05.2003
(51) Int. Cl.: B60T 8/00

(54) **A method and a computer readable storage device for estimating tirc-to-road friction**
Ein Verfahren und ein Computer für eine Abschätzung der Reibung zwischen Reifen und Strasse
procédé et ordinateur pour un estimatif de la friction entre pneu et route.

(43) Date of publication of application: 01.12.2004
(73) Proprietor: Ford Global Technologies, LLC, Dearborn, MI 48126 (US)
(72) Inventor: Ekmark, Jonas, 424 70 Olofstorp (SE); Jansson, Jonas, 589 37 Linköping (SE)
(74) Representative: Romare, Laila Anette

(56) References cited:
- WO-A-20/04016485
- US-A- 5 513 907
- US-B1- 6 508 102
- PATENT ABSTRACTS OF JAPAN vol. 1995, no. 08, 29 September 1995 (1995-09-29) & JP 07 132787 A (TOYOTA MOTOR CORP), 23 May 1995 (1995-05-23)

## Description

### TECHNICAL FIELD

The invention relates to a method for estimating the tire to road friction in order to enable an adaptation of a collision avoidance system to current road friction conditions.

### BACKGROUND ART

The tire to road friction can be estimated by observing longitudinal stiffness, as described in SAE paper 2001-01-0796. The problem of estimating the tire to road friction is that for low excitation levels, such as low throttle or braking levels, the estimate becomes uncertain.

In collision avoidance systems the risk of having a collision is continuously estimated, as described in SAE papers 2001-01-0357 and 2002-01-0403. This can be done by using various sensors, such as radar, lidar and other vision systems observing objects in front of the host vehicle. A collision avoidance system performs an intervention when the collision risk exceeds a certain threshold. In practice, the optimal timing for that intervention is greatly affected by the currently available tire-to-road friction. In the following text the term collision avoidance (CA) system also includes systems for collision mitigation and collision warning.

A method for estimating tire-to-road friction is known from JP-A-07-132 787. According to this document a road friction factor is determined when an automatic braking process is being effected to decelerate the vehicle. This solution requires a relatively fast computer, as the collision-preventing device is already actuated when the estimate is made. As the arrangement uses the brakes only it is not suitable for use under conditions when the vehicle is not decelerating, as an unexpected automatic actuation of the brakes may disturb the driver.

A method according to the preamble of claim 1 is known from US-5513907 B.

A problem to be solved by the invention is to provide a means for performing a friction estimate at any time on demand from the decision mechanism of a CA system. This will allow the performance of the CA system to be improved in low friction situations, whilst retaining a low sensitivity to false warnings in high friction surroundings.

A further problem to be solved is to provide a means for estimating tire-to-road friction at any time on demand from a CA system, without disturbing the driver.

### DISCLOSURE OF INVENTION

The above problems are solved by a method according to claim 1 and the respective dependent claims.

The invention uses a risk estimation module of a collision avoidance (CA) system to determine when to perform an automatic excitation of the tire-to-road contact surfaces to enable estimation of the maximum available tire to road friction with greater precision. The automatic excitation is performed when the collision risk estimated by the CA system exceeds a predetermined limit value. This limit value is lower than the threshold value or values, which will actually trigger a CA intervention or collision warning. The estimated friction can then be used to influence the decision mechanisms of the CA system. It is assumed that the estimated maximum friction level immediately in front of the vehicle will be the same or similar to the current conditions at the time of the excitation.

The invention relates to a method for estimating road-to-tire friction between tires of a wheeled vehicle and a road surface. The method comprises the steps of:
- applying a positive, driving torque to both wheels on a first axle and an equal and opposite, negative, braking torque to at least one wheel on a second axle;
- measuring current values for vehicle speed, angular acceleration of the wheel on the second axle and the negative torque applied to said wheel;
- determining a current friction coefficient using a friction coefficient determining means.

According to a first embodiment the positive torque may be applied by means of a propulsion unit connected to the first axle through a drivetrain for driving one or more wheels on the first axle.

According to a further embodiment the negative torque may be applied by actuating braking means for said at least one wheel on the second axle.

According to a further embodiment the positive and the negative torque may be applied by offsetting a rotational ratio between the first and second axle by an equal and opposite amount.

According to a further embodiment an adjustable all-wheel-drive (AWD) coupling may be used for the purpose of applying positive and negative torque. In a vehicle with a normally fixed rotational ratio between front and rear axles, the torque is typically distributed so that the front wheels have more tractive power under normal conditions. Normal conditions may be defined as a relatively constant speed on a dry, flat surface, such as tarmac. The front/rear distribution of the total torque supplied to the drive train by a propulsion unit, such as an internal combustion engine or an electric motor, may for instance be 70/30. By increasing the torque level of the AWD coupling, the resulting torque would appear with opposite signs at the front and rear axles, thus virtually cancelling the acceleration effect on the vehicle as a whole, but still exciting the contact surfaces of the wheels on both axles to enable a relatively quick and precise friction estimation in a potentially dangerous situation.

The method involves offsetting the rotational ratio of the axles by controlling output torque levels of an all wheel drive coupling connected to the first and second axles. For this purpose, the offset of the rotational ratio between the axles may be 2-5 %, preferably 3 %. Hence one axle may receive 3 % more torque, while the other axle receives 3 % less torque, compared to the normal torque distribution.

According to a further embodiment the rotational ratio between the axles could be set up to include a certain offset, for instance 3 % higher angular velocity at the rearward of the first and second axles.

The invention further relates to a computer readable storage device having stored therein data representing instructions executable by a computer to perform an estimate of road-to-tire friction between tires of a wheeled vehicle and a road surface on request from a collision avoidance system, the vehicle having at least two axles (1, 4), a means for applying a positive, driving torque (T₁; T₃; T₅) to both wheels on a first axle, a means for applying an equal and opposite, negative, braking torque (T₂; T₄; T₆) to at least one wheel on a second axle, an electronic control unit (ECU) for controlling the application of torque, and a friction coefficient determining means, such as an evaluation circuit for determining an estimated value of a road-to-tire friction coefficient (µ).

The computer readable storage device comprises:
- instructions for initiating a procedure for estimating of road-to-tire friction upon request from the collision avoidance system;
- instructions for application of a positive, driving torque to both wheels on a first axle;
- instructions for simultaneous application of an equal and opposite, negative, braking torque to at least one wheel on a second axle;
- instructions for determining a value for a current friction coefficient (µ) using a friction coefficient determining means;
- instructions for transmitting the value for a current friction coefficient (µ) to the collision avoidance system.

By using a friction estimate in the decision mechanism of a CA system, its performance can be improved in low-friction conditions, whilst retaining its immunity to false warnings in high-friction conditions.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a schematic illustration of a vehicle provided with means for estimating road-to-tire friction according to a first embodiment of the invention;
- Figure 2: shows a schematic illustration of a vehicle provided with means for estimating road-to-tire friction according to a second embodiment of the invention;
- Figure 3: shows a flow chart illustrating the procedure for determining the road-to-tire friction coefficient.

### MODES FOR CARRYING OUT THE INVENTION

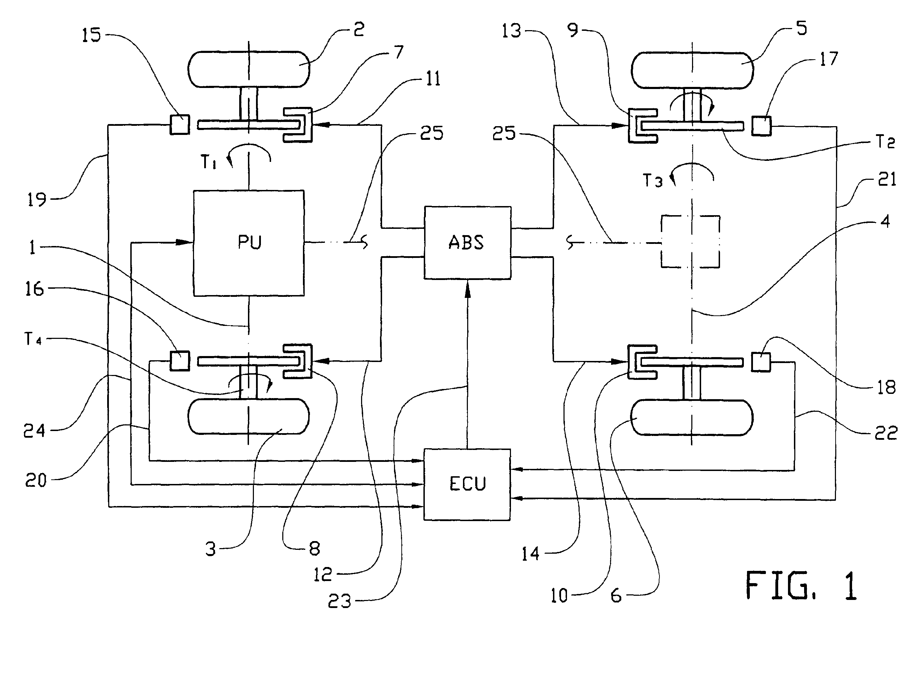

Figure 1 shows a schematic illustration of a vehicle having a front axle 1 and two front wheels 2, 3, and a rear axle 4 and two rear wheels 5, 6. Each wheel is provided with a brake actuator 7-10 supplied with hydraulic pressure from a hydraulic block of a main brake cylinder (not shown). The brake actuators 7-10 are individually controlled by an anti-locking brake control unit ABS that transmits control signals to the brake actuators through signal lines 11-14. An electronic control unit ECU also receives signals representing the hydraulic pressure in each actuator 7-10 from a number of pressure sensors (not shown). Each wheel is also provided with speed sensors 15-18 which transmits signals representing the speed of each wheel 2, 3, 5, 6 to the electronic control unit ECU through signal lines 19-22. The electronic control unit ECU is connected to the anti-locking brake control unit ABS through a signal line 23 allowing the electronic control unit ECU to control individual brake actuators. The electronic control unit ECU is further connected to a control unit (not shown) for a propulsion unit PU through a signal line 24, allowing the electronic control unit ECU to receive and transmit signals for controlling the torque output of the propulsion unit PU. The signals received may include a torque signal and/or an engine speed and an instantaneous crankshaft acceleration signal allowing the torque output to be calculated.

If the propulsion unit is an internal combustion engine, the electronic control unit ECU will control a throttle or similar device to adjust the torque output of the engine.

The electronic control unit ECU contains an evaluation circuit for calculating an estimated value of the tire-to-road friction coefficient µ, based on the signals received from the above mentioned sensors.

The vehicle is provided with a collision avoidance system, hereafter termed CA system, that can determine when to perform an automatic excitation of the tire-to-road contact surfaces to estimate the maximum available tire-to-road friction coefficient µ. The automatic excitation is performed when the collision risk estimated by the CA system exceeds a predetermined limit value. This limit value is lower than the threshold value or values, which will actually trigger a CA system intervention. The estimated friction coefficient can then be used to influence the decision mechanisms of the CA system.

The arrangement in Figure 1 operates as follows. When the collision risk estimated by the CA system exceeds a predetermined limit value, a signal is transmitted to the electronic control unit ECU to perform an automatic excitation of the tire-to-road contact surfaces to estimate the maximum available tire-to-road friction coefficient µ.

The electronic control unit ECU transmits a signal to the anti-locking brake control unit ABS to actuate one of the brake actuators 9, 10 on the rear axle. Simultaneously a signal is transmitted to the control unit for the propulsion unit PU, in order to increase the torque output T₁ of the propulsion unit PU. The electronic control unit ECU will then monitor the braking force applied to said one rear wheel and balance the braking torque T₂ with a corresponding torque T₁ increase from the propulsion unit PU to both the front wheels 2, 3. In this way the driver of the vehicle will not experience a change in vehicle speed or an unexpected acceleration caused by the application of the brakes while the procedure for estimating the maximum available tire-to-road friction coefficient µ is performed.

Figure 1 also indicates a drive shaft 25 from the propulsion unit PU to the rear axle 4, as would be the case for a rear wheel drive vehicle. In this case the electronic control unit ECU transmits a signal to the anti-locking brake control unit ABS to actuate one of the brake actuators 7, 8 on the front axle. Simultaneously a signal is transmitted to the control unit for the propulsion unit PU, in order to increase the torque output T₃ of the propulsion unit PU to the rear axle 4. The electronic control unit ECU will then monitor the braking force applied to said one front wheel and balance the braking torque T₄ with a corresponding torque T₃ increase from the propulsion unit PU to both the rear wheels 5, 6.

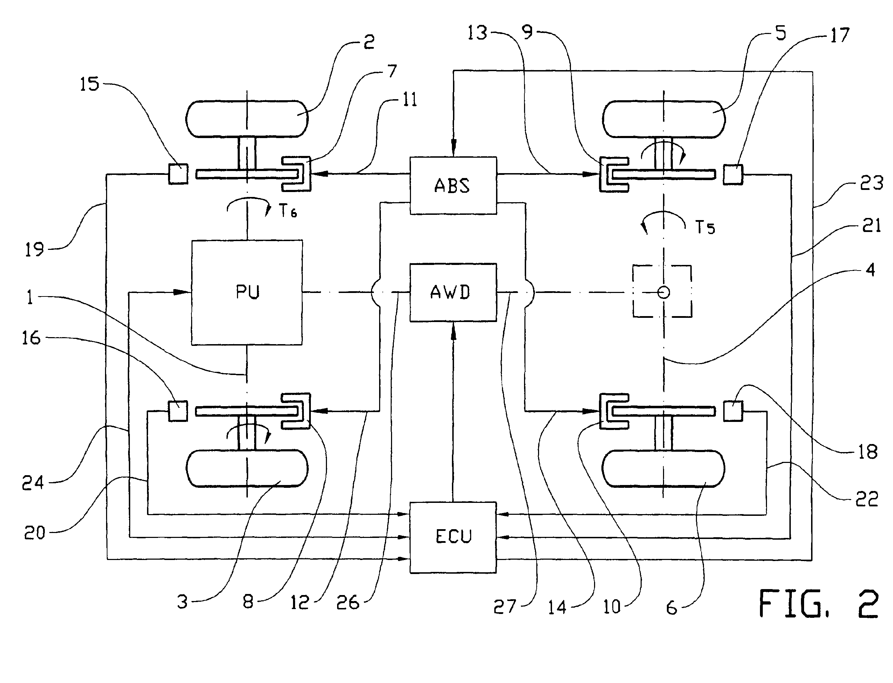

Figure 2 shows a schematic illustration of a vehicle substantially as described in connection with Figure 1. The main difference between the embodiments is that the vehicle shown in Figure 2 is provided with an all-wheel-drive coupling AWD between the front and rear axles 1, 4. The propulsion unit PU drives the front wheels 2, 3 through the front axle 1 and the rear wheels 5, 6 through a drive train comprising a first drive shaft 26, an all-wheel-drive coupling AWD, a second drive shaft 27 and the rear axle 4. The all-wheel-drive coupling AWD distributes the torque output from the propulsion unit PU so that the front axle 1 receives 70 % and the rear axle 4 receives 30 % of the available torque.

The arrangement in Figure 2 operates as follows. When the collision risk estimated by the CA requires an automatic excitation of the tire-to-road contact surfaces to be performed, in order to estimate the maximum available tire-to-road friction coefficient µ, a signal is transmitted to the electronic control unit ECU.

The electronic control unit ECU transmits a signal to the all-wheel-drive coupling AWD to perform a redistribution of the torque. A positive, driving torque T₅ is supplied to the rear axle 4 at the same time as a negative braking torque T₆ is applied to the front axle 1. In this way, the positive and the negative torque T₅ and T₆ respectively is applied by offsetting the rotational ratio between the front and rear axles by an equal and opposite amount. This will virtually cancel the acceleration effect on the vehicle as a whole, but causes the contact surfaces of the wheels on both axles to be excited. A relatively quick friction estimation can then be performed by the evaluation circuit in the electronic control unit ECU, before the torque distribution returns to the normal setting.

The offset of the rotational ratio between the axles may be 2-5 %, preferably 3 %. Hence one axle may receive 3 % more torque, while the other axle receives 3 % less torque, compared to the normal 70/30% torque distribution.

In the preferred embodiment the rotational ratio between the axles is set up to include a certain offset, e.g. 3 % higher angular velocity at the rear axle. However, it is of course possible to reverse the torque distribution, so that the front axle receives a higher angular velocity.

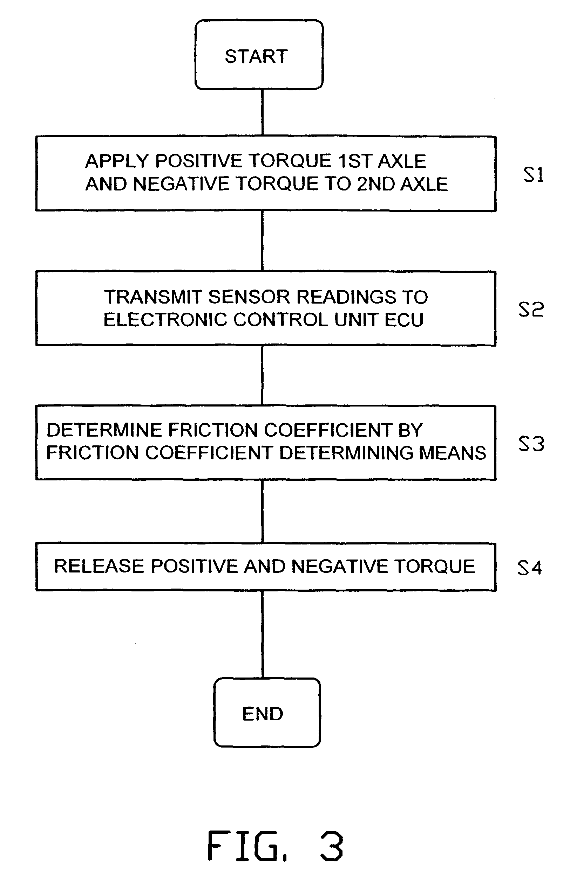

Figure 3 shows a flow chart illustrating the procedure for determining the road-to-tire friction coefficient. The procedure is initiated when a collision risk estimated by the CA system exceeds a predetermined limit value. This limit value is lower than the threshold value or values, which will actually trigger a CA intervention or collision warning. In a first step S1 the electronic control unit ECU simultaneously applies a positive, driving torque to one axle of the vehicle and an equal and opposite negative, braking torque to a second axle of the vehicle. The application of positive and negative torque is balanced, so that the acceleration effect on the vehicle is cancelled. In a second step S2 sensor readings from vehicle speed sensors, angular acceleration sensors for the wheels and sensors measuring values representing to the negative torque, are transmitted to the electronic control unit ECU. In a third step S3 a friction determining means, such as an evaluation circuit determines an estimated road-to-tire friction coefficient µ. The evaluation circuit can be a separate unit or be integrated in the electronic control unit ECU. In a fourth step S4 electronic control unit ECU releases the torque control and the estimated road-to-tire friction coefficient µ is transmitted to the CA system.

The estimated friction coefficient can then be used to influence the decision mechanisms of the CA system

The embodiment of Figure 2 is also be provided with the sensor and control arrangements as described in connection with Figure 1, as indicated. This can be used to provide the electronic control unit ECU with feedback signals allowing the actual offset of the torque distribution to be monitored.

Alternatively, the arrangement can also be used as described in connection with Figure 1, when the four-wheel drive has been disengaged. The vehicle may then use either front or rear wheel drive. The all-wheel-drive coupling AWD may also allow switching between the two drive modes.

Although the above arrangements are described for a vehicle with an internal combustion engine and a hydraulic brake system, the inventive idea may also be applied to electrically propelled vehicles with two or four wheel drive and electrically actuated brakes.

The invention is not limited to the embodiments described above and may be varied freely within the scope of the appended claims.

## Claims

1. A method for estimating road-to-tire friction between tires of a wheeled vehicle and a road surface, which vehicle is provided with a collision avoidance system
- measuring current values for speed, angular acceleration of the wheel on the second axle and the negative torque applied to said wheel;
- -determining a current friction using a friction coefficent determining means **characterized by** the steps of:
- applying a positive torque to both wheels on a first axle and an equal and opposite, negative torque to at least one wheel on a second axle;

2. A method according to claim 1, **characterized by** applying the positive torque by means of a propulsion unit connected to the first axle through a drivetrain for driving one or more wheels on the first axle.

3. A method according to any one of claims 1 or 2, **characterized by** applying the negative torque by actuating braking means for said at least one wheel.

4. A method according to claim 1, **characterized by** applying the positive and the negative torque by offsetting a rotational ratio between the first and second axle by an equal and opposite amount.

5. A method according to claim 4, **characterized by** offsetting the rotational ratio of the axles by controlling output torque levels of an all wheel drive coupling connected to the first and second axles.

6. A method according to any one of claims 4 or 5, **characterized by** offsetting the rotational ratio of the axles so that the rearward of the first and second axles has a higher angular velocity.

7. A method according to any one of claims 4-6, **characterized by** offsetting the rotational ratio between the axles 2-5 %.

8. A method according to claim 7, **characterized by** offsetting the rotational ratio between the axles 3 %.

9. A method according to any one of claims 1-9, **characterized by** triggering the estimation of a current tire-to-road friction at a predetermined limit value that is lower than a threshold value that will actually trigger an intervention by the collision avoidance system.

10. A computer readable storage device having stored therein data representing instructions executable by a computer to perform an estimate of road-to-tire friction between tires of a wheeled vehicle and a road surface on request from a collision avoidance system, the vehicle having at least two axles (1, 4), a means for applying a positive, driving torque (T₁; T₃; T₅) to both wheels on a first axle, a means for applying an equal and opposite, negative, braking torque (T₂; T₄; T₆) to at least one wheel on a second axle, an electronic control unit (ECU) for controlling the application of torque, and a friction coefficient determining means for determining an estimated value of a road-to-tire friction coefficient (µ), the computer readable storage device comprising:
- instructions for initiating a procedure for estimating of road-to-tire friction upon request from the collision avoidance system,
- instructions for application of a positive, driving torque to both wheels on a first axle;
- instructions for simultaneous application of an equal and opposite, negative, braking torque to at least one wheel on a second axle;
- instructions for determining a value for a current friction coefficient (µ) using a friction coefficient determining means ;
- instructions for transmitting the value for a current friction coefficient (µ) to the collision avoidance system.

## Patentansprüche

1. Verfahren zum Abschätzen der Reibung zwischen Straße und Reifen zwischen den Reifen eines Radfahrzeugs und einer Straßenoberfläche, wobei das Fahrzeug mit einem Kollisionsverhütungssystem versehen ist
wobei aktuelle Werte der Fahrzeuggeschwindigkeit, Winkelbeschleunigung des Rades an der zweiten Achse und des negativen Drehmoments, das auf das Rad ausgeübt wird, gemessen werden;
wobei ein aktueller Reibungskoeffizient unter Verwendung einer Reibungskoeffizientenbestimmungseinrichtung bestimmt wird,
**gekennzeichnet durch** die Schritte:
Ausüben eines positiven Drehmoments auf beide Räder an einer ersten Achse und eines gleichen und entgegengesetzten, negativen Drehmoments auf mindestens ein Rad auf einer zweiten Achse.

2. Verfahren nach Anspruch 1, **gekennzeichnet durch** Ausüben des positiven Drehmoments mittels einer Antriebseinheit, die mit der ersten Achse **durch** einen Antriebsstrang zum Antreiben eines oder mehrerer Räder auf der ersten Achse verbunden ist.

3. Verfahren nach einem der Ansprüche 1 oder 2, **gekennzeichnet durch** Ausüben des negativen Drehmoments **durch** Betätigen einer Bremseinrichtung für das mindestens eine Rad.

4. Verfahren nach Anspruch 1, **gekennzeichnet durch** Ausüben des positiven und des negativen Drehmoments **durch** Versetzen eines Rotationsverhältnisses zwischen der ersten und zweiten Achse um einen gleichen und entgegengesetzten Betrag.

5. Verfahren nach Anspruch 4, **gekennzeichnet durch** Versetzen des Rotationsverhältnisses der Achsen **durch** Steuern von Ausgangsdrehmomentpegeln einer Allradantriebskupplung, die mit den ersten und zweiten Achsen verbunden ist.

6. Verfahren nach einem der Ansprüche 4 oder 5, **gekennzeichnet durch** Versetzen des Rotationsverhältnisses der Achsen, so daß die rückwärtige der ersten und zweiten Achsen eine höhere Winkelgeschwindigkeit aufweist.

7. Verfahren nach einem der Ansprüche 4-6, **gekennzeichnet durch** Versetzen des Rotationsverhältnisses zwischen den Achsen um 2-5%.

8. Verfahren nach Anspruch 7, **gekennzeichnet durch** Versetzen des Rotationsverhältnisses zwischen den Achsen um 3%.

9. Verfahren nach einem der Ansprüche 1-9, **gekennzeichnet durch** Auslösen der Abschätzung einer aktuellen Reibung zwischen Straße und Reifen bei einem vorgegebenen Grenzwert, der niedriger als ein Schwellenwert ist, der tatsächlich einen Eingriff **durch** das Kollisionsverhütungssystem auslösen wird.

10. Computerlesbare Speichervorrichtung, in der Daten gespeichert sind, die Befehle repräsentieren, die durch einen Computer ausführbar sind, um eine Abschätzung der Reibung zwischen Straße und Reifen zwischen Reifen eines Radfahrzeugs und einer Straßenoberfläche bei einer Anforderung von einem Kollisionsverhütungssystem durchzuführen, wobei das Fahrzeug aufweist: mindestens zwei Achsen (1, 4), eine Einrichtung zum Ausüben eines positiven Antriebsdrehmoments (T₁; T₃; T₅) auf beide Räder einer ersten Achse, eine Einrichtung zum Ausüben eines gleichen und entgegengesetzten, negativen Bremsdrehmoments (T₂; T₄; T₆) auf mindestens ein Rad einer zweiten Achse, eine elektronische Steuerung (ECU) zur Steuerung der Ausübung des Drehmoments, und eine Reibungskoeffizientenbestimmungseinrichtung zur Bestimmung eines Schätzwertes eines Reibungskoeffizienten (µ) zwischen Straße und Reifen, wobei die computerlesbare Speichervorrichtung aufweist:
- Befehle zum Einleiten einer Prozedur zum Abschätzen der Reibung zwischen Straße und Reifen bei einer Anforderung vom Kollisionsverhütungssystem;
- Befehle zur Anwendung eines positiven Antriebsdrehmoments auf beide Räder einer ersten Achse;
- Befehle zur gleichzeitigen Anwendung eines gleichen und entgegengesetzten, negativen Bremsdrehmoments auf mindestens ein Rad auf einer zweiten Achse,
- Befehle zum Bestimmen eines Werts für einen aktuellen Reibungskoeffizienten (µ) unter Verwendung einer Reibungskoeffizientenbestimmungseinrichtung;
- Befehle zum Übertragen des Werts für einen aktuellen Reibungskoeffizienten (µ) zum Kollisionsverhütungssystem.

## Revendications

1. Procédé pour estimer la friction entre pneu et route entre des pneus d'un véhicule à roues et une surface de route, lequel véhicule est équipé d'un système anticollision, consistant à
- mesurer des valeurs actuelles de vitesse de véhicule, d'accélération angulaire de la roue sur le deuxième essieu et le couple négatif appliqué à ladite roue ;
- déterminer un coefficient de friction actuel en utilisant un moyen de détermination de coefficient de friction, **caractérisé par** les étapes consistant à :
- appliquer un couple positif aux deux roues sur un premier essieu et un couple négatif égal et opposé à au moins une roue sur le deuxième essieu.

2. Procédé selon la revendication 1, **caractérisé en ce qu'**il consiste à appliquer le couple positif au moyen d'une unité de propulsion reliée au premier essieu par l'intermédiaire d'une transmission pour entraîner une ou plusieurs roues sur le premier essieu.

3. Procédé selon l'une quelconque des revendications 1 et 2, **caractérisé en ce qu'**il consiste à appliquer le couple négatif en actionnant des moyens de freinage pour ladite au moins une roue.

4. Procédé selon la revendication 1, **caractérisé en ce qu'**il consiste à appliquer le couple positif et le couple négatif en décalant un rapport de rotation entre le premier et le deuxième essieux d'une quantité égale et opposée.

5. Procédé selon la revendication 4, **caractérisé en ce qu'**il consiste à décaler le rapport de rotation des essieux en commandant des niveaux de couple de sortie d'une transmission toutes roues motrices reliée aux premier et deuxième essieux.

6. Procédé selon l'une quelconque des revendications 4 et 5, **caractérisé en ce qu'**il consiste à décaler le rapport de rotation des essieux de manière celui arrière des premier et deuxième essieux ait une vitesse angulaire supérieure.

7. Procédé selon l'une quelconque des revendications 4 à 6, **caractérisé en ce qu'**il consiste à décaler le rapport de rotation entre les essieux de 2-5%.

8. Procédé selon la revendication 7, **caractérisé en ce qu'**il consiste à décaler le rapport de rotation entre les essieux de 3%.

9. Procédé selon l'une quelconque des revendications 1 à 9, **caractérisé en ce qu'**il consiste à déclencher l'estimation de la friction actuelle entre pneu et route à une valeur limite prédéterminée qui est inférieure à une valeur de seuil qui déclencherait réellement une intervention de la part du système anticollision.

10. Dispositif de stockage lisible par ordinateur ayant mémorisé à l'intérieur des données représentant des instructions exécutables par un ordinateur pour effectuer une estimation de friction entre pneu et route entre des pneus d'un véhicule à roues et une surface de route à la demande d'un système anticollision, le véhicule ayant au moins deux essieux (1, 4), un moyen pour appliquer un couple moteur positif (T₁ ; T₃ ; T₅) aux deux roues sur un premier essieu, un moyen pour appliquer un couple de freinage négatif égal et opposé (T₂ ; T₄ ; T₆) à au moins une roue sur un deuxième essieu, une unité de commande électronique (ECU) pour commander l'application de couple, et un moyen de détermination de coefficient de friction pour déterminer une valeur estimée d'un coefficient de friction entre pneu et route (µ), le dispositif de stockage lisible par ordinateur comprenant :
- des instructions pour lancer une procédure d'estimation de friction entre pneu et route à la demande du système anticollision ;
- des instructions pour appliquer un couple moteur positif aux deux roues sur un premier essieu ;
- des instructions appliquer simultanément un couple de freinage négatif égal et opposé à au moins une roue sur un deuxième essieu ;
- des instructions pour déterminer une valeur pour un coefficient de friction actuel (µ) en utilisant moyen de détermination de coefficient de friction ;
- des instructions pour transmettre la valeur pour un coefficient de friction actuel (µ) au système anticollision.
